# EUROPÄISCHE PATENTSCHRIFT

(11) **EP 2 322 044 B1**
(45) Veröffentlichungstag und Bekanntmachung des Hinweises auf die Patenterteilung: **21.03.2012**
(21) Anmeldenummer: 10008292.4
(22) Anmeldetag: 09.08.2010
(51) Int. Cl.: A23L 3/00, A23L 3/015, A61L 2/02, A61L 2/26, B65D 81/20

(54) **Transportbehälter**
Transport container
Conteneur de transport

(30) Priorität: 18.09.2009 DE 102009042094
(43) Veröffentlichungstag der Anmeldung: 18.05.2011
(60) Teilanmeldung: 11006168.6
(73) Patentinhaber: MULTIVAC Sepp Haggenmüller GmbH & Co KG, 87787 Wolfertschwenden (DE)
(72) Erfinder: Richter, Tobias, 87700 Memmingen (DE)
(74) Vertreter: Grünecker, Kinkeldey, Stockmair & Schwanhäusser

(56) Entgegenhaltungen:
- EP-A1- 0 165 152
- WO-A1-00/69475
- WO-A1-95/24932
- DE-A1- 2 611 389
- FR-A1- 2 443 840
- FR-A1- 2 542 200
- DATABASE WPI Week 197811 Thomson Scientific, London, GB; AN 1978-20975A XP002621238, "Autoclave segmented basket", -& SU 557 003 A1 (FISHERIES MECHN RE) 28. Juni 1977 (1977-06-28)

## Beschreibung

Die vorliegende Erfindung bezieht sich auf einen Transportbehälter zur Aufnahme von Produkten während einer Hochdruckbehandlung dieser Produkte. Der Transportbehälter nimmt die Produkte zudem während des Transports zu einer Kammer auf, in der die Produkte hochdruckbehandelt werden, sowie während des Transports aus dieser Kammer heraus. Bei den Produkten kann es sich um verpackte Lebensmittel handeln.

Lebensmittel sind chemischen und biologischen Prozessen unterworfen, die ihre Zusammensetzung verändern und auch gesundheitsschädliche Substanzen erzeugen können. Beispielsweise können die Lebensmittel oxidieren, oder sie können durch Enzyme und Mikroorganismen, beispielsweise Schimmelpilze, verändert werden. Damit Lebensmittel für den Verbraucher sicher zu verzehren, transportierbar und möglichst lange haltbar sind, müssen diese Prozesse verhindert oder zumindest innerhalb der gewünschten Haltbarkeit verzögert werden.

Eine Möglichkeit besteht darin, Lebensmittel stark zu zuckern, zu salzen oder zu trocknen, um dem Lebensmittel Wasser zu entziehen und so die Entwicklung von Mikroorganismen wie Schimmelpilzen oder Bakterien zu behindern. Auch die Zugabe von Alkohol oder Essig, der Zusatz von Konservierungsmitteln sowie das Kühlen bremsen die Entwicklung von Mikroorganismen und setzen die Aktivität von Enzymen herab. Ferner kann eine Hitzebehandlung dafür sorgen, dass Mikroorganismen abgetötet und schädliche Enzyme inaktiviert werden. Bei der Pasteurisation wird das Lebensmittel dabei für eine gewisse Zeit auf unter 100 °C erwärmt. Allerdings bleiben dabei die vergleichsweise resistenten Bakteriensporen weiterhin keimfähig, und es besteht die Gefahr, dass durch die Hitzebehandlung auch wichtige Nährstoffe und Aromen zerstört werden.

Eine weitere Methode zur Verlängerung der Haltbarkeit von Lebensmitteln besteht darin, die Lebensmittel in eine gasdichte Verpackung einzufüllen und die Verpackung vor dem Verschließen zu evakuieren. Gegebenenfalls kann der Verpackung noch ein Schutzgas oder -mischungen beigegeben werden, beispielsweise mit Stickstoff oder CO₂. Durch die Verdrängung der Luft, beispielsweise des Sauerstoffs, wird ebenfalls die Aktivität von Enzymen oder Mikroorganismen verlangsamt.

Ein zumindest in industriellem Maßstab bisher kaum genutztes Verfahren ist die Hochdruckbehandlung von Lebensmitteln. Bei diesem Verfahren wird ein üblicherweise bereits verpacktes Lebensmittel über eine gewisse Zeitspanne, beispielsweise einige Minuten, sehr hohen Drücken von typischerweise 400 MPa bis 600 MPa unterworfen. Diese hohen Drücke sorgen dafür, dass schädliche Mikroorganismen im Lebensmittel zerstört und abgetötet werden. Kleinere Moleküle hingegen, wie Vitamine, die Geschmack und Nährwert des Lebensmittels bestimmen, werden durch die Hochdruckbehandlung kaum beeinflusst. Bei Fleischprodukten kann die Haltbarkeit so beispielsweise um den Faktor 6 bis 10 im Vergleich zum unbehandelten Produkt verlängert werden.

Gegenüber der Hitzebehandlung hat die Hochdruckbehandlung verschiedene Vorteile. Beispielsweise wird der Geschmack kaum verändert, und der Vitamingehalt im Lebensmittel ist nach einer Hochdruckbehandlung teilweise mehr als doppelt so hoch wie nach einer Hitzebehandlung. Einige hitzeempfindliche Produkte, beispielsweise Meeresfrüchte, lassen zudem überhaupt keine Hitzebehandlung zu. Pathogene Keime, wie Listerien, können sicher abgetötet werden, sodass die Lebensmittelsicherheit erhöht wird. Durch die Hochdruckbehandlung lässt sich die interne Struktur der Lebensmittel aber auch gezielt beeinflussen, sodass sich neuartige Produktmöglichkeiten, beispielsweise durch das Gelieren von Fruchtzubereitungen ohne Hitze, ergeben. Schließlich ist die Technologie zur Hochdruckbehandlung bereits in vielen Ländern als (Lebensmittel-) sicher anerkannt.

Bei der Hochdruckbehandlung von verpackten Lebensmitteln kann es durch die Prozessbedingungen zu Problemen mit der Verpackung kommen. So können optisch nachteilige Veränderungen und auch Schäden auftreten. Speziell Verpackungen mit Schutzgasatmosphäre bereiten durch den stark komprimierbaren Gasanteil in der Packung Probleme. Dies ist auch ein Grund dafür, dass bislang vorwiegend Vakuumverpackungen bei der Hochdruckbehandlung eingesetzt werden.

Die Inaktivierung von Mikroorganismen sowie die Strukturmodifikation von Lebensmittelbestandteilen werden beispielsweise beschrieben in der EP 0 588 010 A1, der EP 0 689 391 B1, der EP 0 752 211 B1, der EP 1 100 340 B1, der DE 42 26 255 A1, oder der DE 37 34 025 C2. Die EP 1 112 008 B1, EP 1 201 252 B1, DE 196 49 952 A1, DE 197 38 800 A1, DE 199 39 677 A1 und die DE 26 11 389 A1 beschreiben die Auswirkungen der Hochdruckbehandlungen auf die mikrobiologische Haltbarkeit und die Sicherheit von Lebensmitteln. Die Anwendung der Hochdruckbehandlung speziell auf Fleischerzeugnisse wird beschrieben in der DE 198 01 031 C2, DE 1 965 36 C1, EP 0 748 592 B1, EP 0 683 986 B1, DE 101 01 958 A1, DE 10 2005 011 868 A1, oder der WO 2006/097248 A1.

Eine Anlage zur Hochdruckbehandlung von Lebensmitteln ist darüber hinaus aus der WO 2006/129180 A1 bekannt. Dabei ist ein Autoklav mit einer Hochdruckkammer vorgesehen, in der die Lebensmittel einem Hochdruck ausgesetzt werden. Zum Aufbauen des Drucks muss der Autoklav verschlossen werden. Folglich kann die Anlage nicht kontinuierlich betrieben werden. Um den Durchsatz der Anlage zu erhöhen, wird sie typischerweise in einem Batch-Verfahren betrieben, bei dem die Produkte gruppenweise in den Autoklaven eingebracht, hochdruckbehandelt und entnommen werden.

Um den Autoklaven schneller be- und entladen zu können und so die Taktzeit zu verkürzen, werden die zu behandelnden Produkte üblicherweise in einen Transportbehälter eingefüllt. Sobald die Hochdruckkammer frei ist, können ein oder ggf. mehrere Transportbehälter in die Hochdruckkammer hinein gefahren werden, beispielsweise indem die Transportbehälter mittels eines Schiebers bewegt werden. Im Anschluss an die Hochdruckbehandlung werden die Transportbehälter wieder aus dem Autoklaven entnommen, beispielsweise indem sie auf der der Einführöffnung gegenüber liegenden Seite wieder herausgeschoben werden.

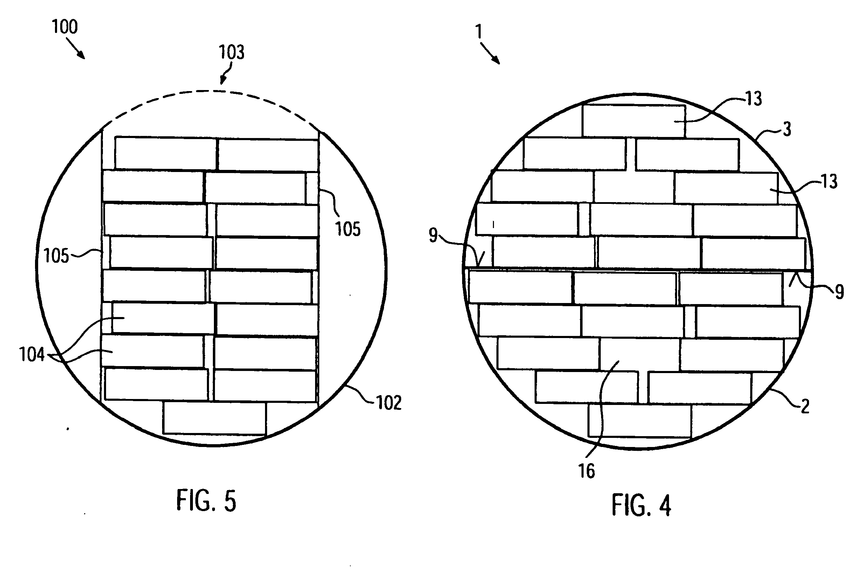

Die Transportbehälter, gelegentlich auch als Patrone bezeichnet, haben üblicherweise einen kreisrunden Querschnitt bzw. eine zylindrische Form, um sich der i. d. R. zylindrischen Innenwand der Hochdruckkammer anzupassen. Figur 5 zeigt einen Querschnitt eines herkömmlichen Transportbehälters 100. Der Transportbehälter 100 hat eine Außenwand 102, die ihm einen kreisförmigen Querschnitt verleiht. Über nahezu die gesamte Länge des Transportbehälters 100 befindet sich an dessen Oberseite eine Einfüllöffnung 103, über die Produkte 104 in den Transportbehälter 100 eingefüllt bzw. aus dem Transportbehälter 100 entnommen werden können.

Zumindest bei Befüllung durch einen Roboter können die Produkte 104 nur unmittelbar senkrecht unter der Einfüllöffnung 103 gestapelt werden, nicht jedoch in den durch die Außenwand 102 verdeckten seitlichen Bereichen. Damit die Produkte 104 nicht in diese durch die oberen Abschnitte der Außenwand 102 verdeckten Bereiche rutschen, können Innenwände 105 vorgesehen sein, an denen die Produkte 104 anliegen.

Nachteilig an dem herkömmlichen Transportbehälter ist, dass zumindest bei Befüllung durch einen Roboter ein erheblicher Teil seines Innenvolumens nicht für die Aufnahme von Produkten genutzt werden kann. Außerdem wird ein weiterer Teil des theoretisch nutzbaren Füllvolumens nicht befüllt, da nicht höher als der Rand der Öffnung 103 gefüllt werden darf.

Behälter, die zur Aufnahme von Produkten während einer Temperatursterilisierung geeignet sind, aber einer Hochdruckbehandlung aller Voraussicht nach nicht standhalten würden, sind beispielsweise aus der EP 0 165 152 A1, der WO 95/24932 A1 oder der FR 2 542 200 A1 bekannt.

Aufgabe der Erfindung ist es, einen Transportbehälter zur Aufnahme von Produkten während einer Hochdruckbehandlung zur Verfügung zu stellen, der mit konstruktiven möglichst einfachen Mitteln dahingehend verbessert ist, dass er trotz Gewährleistung der erforderlichen Stabilität selbst bei Befüllung durch einen Roboter einen höheren Füllgrad erreicht.

Diese Aufgabe wird gelöst durch einen Transportbehälter mit den Merkmalen des Anspruchs 1. Vorteilhafte Weiterbildung der Erfindung sind in den Unteransprüchen angegeben.

Der erfindungsgemäße Transportbehälter zeichnet sich dadurch aus, dass er ein Unterteil und ein Oberteil aufweist, die miteinander verbindbar sind, wobei sowohl das Unterteil, als auch das Oberteil zur Aufnahme mindestens eines Produkts ausgebildet ist. Diese mehrteilige Ausbildung des Transportbehälters widerspricht der herkömmlichen Überzeugung, dass der Transportbehälter einstückig ausgeführt werden müsse, da er ansonsten den extremen Drücken während der Hochdruckbehandlung nicht standhalten könne. Überraschenderweise hat sich jedoch gezeigt, dass auch ein mehrteiliger Transportbehälter bei geeigneter Ausbildung den hohen Drücken standhalten kann. Durch die Aufteilung des Transportbehälters in ein Unterteil und ein Oberteil ergeben sich mehrere Vorteile:
- Beide Teile lassen sich vollständig füllen, der üblicherweise nicht nutzbare Raum entfällt.
- Oberteil und Unterteil können gleichzeitig be- oder entladen werden, sodass die Zeit zum Be- und Entladen verkürzt wird.
- Im Vergleich zur herkömmlichen Beladung vergrößert sich die zum Be- und Entladen zur Verfügung stehende Öffnung, sodass das Be- und Entladen erleichtert wird.
- Durch den großen Querschnitt der zugänglichen Öffnung lassen sich einfach individuelle Produkthalter/Innenwände einlegen.
- Auch Produkte unterschiedlicher Größe lassen sich als Packmuster dem Radius der Behälter entsprechend einlegen.
- Bei geeigneter Trennung des Transportbehälters in Ober- und Unterteil liegen keine durch den Rand der Einfüllöffnung verdeckten Bereichen vor. Somit kann auch beim Befüllen durch einen Roboter der gesamte Raum im Unterteil und Oberteil mit Produkten in einem idealen, produktspezifischen Packmuster befüllt werden, sodass der Füllgrad und der Wirkungsgrad der Hochdruckanlage deutlich höher werden.

Es ist denkbar, dass das Unterteil und das Oberteil während des Be- oder Entladens oder zumindest zu Wartungs- und Reinigungszwecken vollständig voneinander getrennt sind und nur während des Transports und der Hochdruckbehandlung miteinander verbunden sind. Einfacher handhabbar wird der Transportbehälter jedoch, wenn das Unterteil und das Oberteil dauerhaft auf eine relativ zueinander bewegliche Weise miteinander verbunden sind, da der Transportbehälter in diesem Fall leichter als Ganzes handhabbar ist, und beispielsweise als Ganzes von der Entladestation wieder zur Befüllstation gebracht werden kann.

Das Oberteil und das Unterteil ergänzen sich zu einer zylindrischen Form des gesamten Transportbehälters, damit sich der Transportbehälter möglichst gut der Innenform der Hochdruckkammer anpasst und das zur Verfügung stehende Volumen möglichst gut ausnutzt.

Das Unterteil und das Oberteil haben jeweils eine halbzylindrische Form. Auf diese Weise wird bei einer zylindrischen Form des gesamten Transportbehälters die für jedes der beiden Teile zur Verfügung stehende Einfüllöffnung maximiert. Somit steht der gesamte Durchmesser der in zusammengeklappter Form zylindrischen Transportbehälters für das Be- und Entladen zur Verfügung.

Unabhängig davon, ob das Unterteil und das Oberteil lösbar miteinander verbindbar oder dauerhaft miteinander verbunden sind, können sie im miteinander verbundenen Zustand über ein erstes Scharnier verbunden sein. Dieses Scharnier erlaubt eine einfache Bewegung zum Schließen des Transportbehälters, indem das Unterteil und das Oberteil lediglich um das erste Scharnier relativ zueinander verschwenkt werden.

Im Hinblick auf die Hochdruckbehandlung ist es günstig, wenn das erste Scharnier schmiermittelfrei ist, damit das Schmiermittel nicht während der Hochdruckbehandlung aus dem Scharnier ausgetrieben wird. Für das Scharnier eignen sich daher beispielsweise sogenannte "selbstschmierende" Kunststoffe.

Idealerweise ist mindestens ein Halteelement vorgesehen, um im Oberteil- und/oder im Unterteil aufgenommene Produkte zu halten bzw. zu sichern. Insbesondere kann es beim erfindungsgemäßen Transport behälter erforderlich sein, das Unterteil oder das Oberteil zu schwenken oder zu verkippen, um den Transportbehälter zu schließen. Bei dieser Schwenkbewegung sichert das mindestens eine Halteelement die Produkte gegen ein Verrutschen innerhalb des Oberteils oder Unterteils.

Sowohl eine lösbare Anbringung des mindestens einen Halteelements, als auch eine dauerhafte Anbringung des Halteelements am Unterteil- und/oder Oberteil sind denkbar. Beide Varianten können Vorteile haben. Eine lösbare Anbringung kann unter Umständen die zum Einfüllen zur Verfügung stehende Öffnung vergrößern. Eine dauerhafte Anbringung kann die einheitliche Handhabung des gesamten Transportbehälters und beispielsweise ein automatisiertes Handling erleichtern.

Insbesondere bei einer dauerhaften Anbringung könnte das mindestens eine Halteelement über ein zweites Scharnier am Unterteil oder Oberteil angebracht sein. Das Halteelement könnte in diesem Fall durch eine einfache Schwenkbewegung um das zweite Scharnier bewegt werden, um das Unterteil bzw. das Oberteil abzuschließen und die Produkte sicher im betreffenden Teil zu halten.

Die zum Schließen des Transportbehälters erforderlichen Bewegungen werden erleichtert, wenn die durch das erste Scharnier definierte Schwenkachse parallel zu der durch das zweite Scharnier definierten Schwenkachse ist.

Alternativ ist es möglich, dass das mindestens eine Halteelement über eine Schiene am Unterteil und/oder am Oberteil anbringbar oder dauerhaft angebracht ist. In diesem Fall wäre das Halteelement in der Schiene verschiebbar, um das Unterteil bzw. das Oberteil zu öffnen oder zu schließen. Bei einem automatisierten Betrieb der Hochdruckbehandlungsanlage könnte diese Verschiebebewegung leichter ausführbar sein als eine Schwenkbewegung um ein Scharnier.

Vorzugsweise ist das mindestens eine Halteelement lösbar am Unterteil und/oder am Oberteil festlegbar, sodass es seine Position relativ zum zugeordneten Unterteil oder Oberteil nicht mehr verändern und somit die Produkte sicher halten kann.

Wenn das Halteelement mindestens eine Öffnung aufweist, die den Durchtritt von Hochdruckmedium erlaubt, kann auf vorteilhafte Weise ein Druckausgleich zwischen Oberteil und Unterteil erfolgen, sodass die Produkte in beiden Teilen des Transportbehälters mit dem selben Druck behandelt werden. Auf diese Weise wird ein gleichmäßiges Behandlungsergebnis erzielt.

In einer Variante der Erfindung ist das Halteelement als Ganzes oder zumindest abschnittsweise als ein Gitter ausgebildet. Das Gitter hat den Vorteil, vergleichsweise leicht zu sein, große Öffnungen für den Durchtritt von Hochdruckmedium aufzuweisen und gleichzeitig die Produkte sehr sicher halten zu können.

Im Hinblick auf eine automatisierte Betriebsweise und auf die Dimensionierung der Hochdruckbehandlungsanlage hat es sich als zweckmäßig erwiesen, wenn der Transportbehälter ein Fassungsvermögen im Bereich von 50 Litern bis 600 Litern hat.

Im folgenden werden zwei vorteilhafte Ausführungsbeispiele der Erfindung anhand einer Zeichnung näher dargestellt. Im Einzelnen zeigen:
Fig. 1 eine perspektivische Ansicht eines ersten Ausführungsbeispiels des erfindungsgemäßen Transportbehälters in einer geöffneten Stellung,
Fig. 2 den in Figur 1 gezeigten Transportbehälter in einer geschlossenen Stellung,
Fig. 3 ein zweites Ausführungsbeispiel eines erfindungsgemäßen Transportbehälters in einer geöffneten Stellung,
Fig. 4 einen Querschnitt durch einen geschlossenen und gefüllten Transportbehälter gemäß der Erfindung, und
Fig. 5 einen Querschnitt durch einen gefüllten herkömmlichen Transportbehälter.

Gleiche Komponenten sind in den Figuren durchgängig mit gleichen Bezugszeichen versehen.

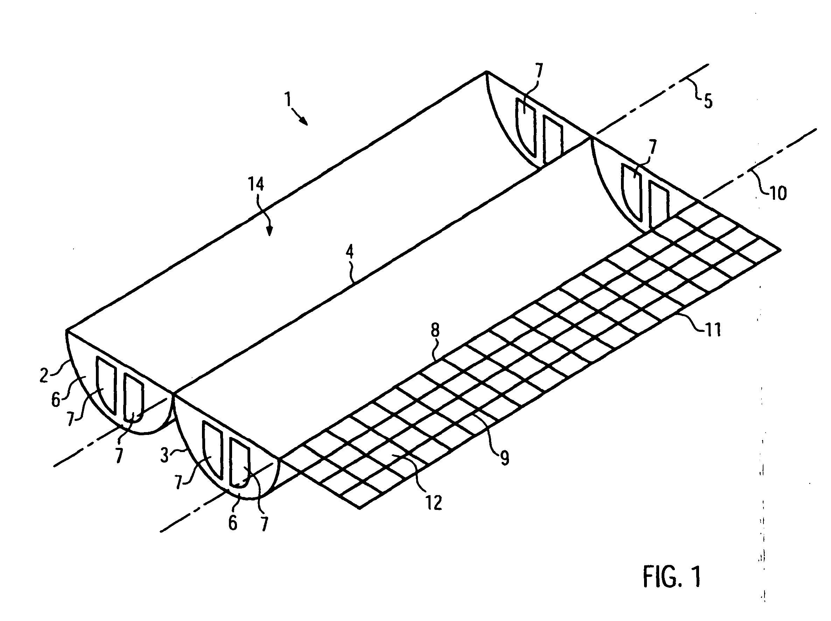

Figur 1 zeigt ein erstes Ausführungsbeispiel eines erfindungsgemäßen Transportbehälters 1 in einer geöffneten Stellung. Der Transportbehälter 1 weist ein Unterteil 2 und ein Oberteil 3 auf, die jeweils eine halbzylindrische Form haben. Unterteil 2 und Oberteil 3 können beispielsweise aus einem hochdruckresistenten Kunststoff bestehen. An ihrer Längsseite sind das Unterteil 2 und das Oberteil 3 über ein erstes Scharnier 4 miteinander verbunden. Das erste Scharnier 4 definiert eine erste Schwenkachse 5, um das Oberteil 3 relativ zum Unterteil 2 verschwenkt werden kann, um den Transportbehälter 1 zu schließen.

An ihren beiden Enden in Längsrichtung haben sowohl das Unterteil 2, als auch das Oberteil 3 eine etwa halbkreisförmige Stirnfläche 6. Die Stirnfläche 6 ist eben ausgebildet, damit ein Schieber (nicht dargestellt) leichter am geschlossenen Transportbehälter 1 angreifen kann, um den Transportbehälter in eine Hochdruckanlage bzw. aus der Hochdruckanlage heraus zu schieben. In jeder der ebenen Stirnflächen 6 sind Öffnungen 7 vorhanden, die den Eintritt von Hochdruckmedium in den geschlossenen Transportbehälter 1 erlauben, damit die im Transportbehälter 1 aufgenommenen Produkte dem Hochdruck ausgesetzt sind. Ggf. können die Seiten des Zylinders auch mit Öffnungen 7 ausgestattet sein.

Über ein zweites Scharnier 8 ist ein als Gitter ausgebildetes Halteelement 9 am Oberteil 3 befestigt. Das zweite Scharnier 8 definiert eine zweite Schwenkachse 10, um die das Halteelement 9 relativ zum Oberteil 3 verschwenkt werden kann. Insbesondere kann das Halteelement 9 aus der in Figur 1 gezeigten, geöffneten Stellung um 180 Grad gegen den Uhrzeigersinn verschwenkt werden, sodass die Außenkante 11 des Halteelements 9 am ersten Scharnier 4 anliegt. Im Bereich des ersten Scharniers 4 und an der Außenkante 11 des Halteelements 9 kann dabei ein Schließelement (nicht dargestellt) vorgesehen sein, mittels dessen das Halteelement 9 in seiner das Oberteil verschließenden Stellung lösbar befestigt werden kann. Die Maschen 12 des gitterförmigen Halteelements 9 stellen Öffnungen dar, durch den das Hochdruckmedium frei zwischen Unterteil 2 und Oberteil 3 fließen kann, sodass ein Druckausgleich zwischen den beiden Teilen des Transportbehälters 1 erzielt wird.

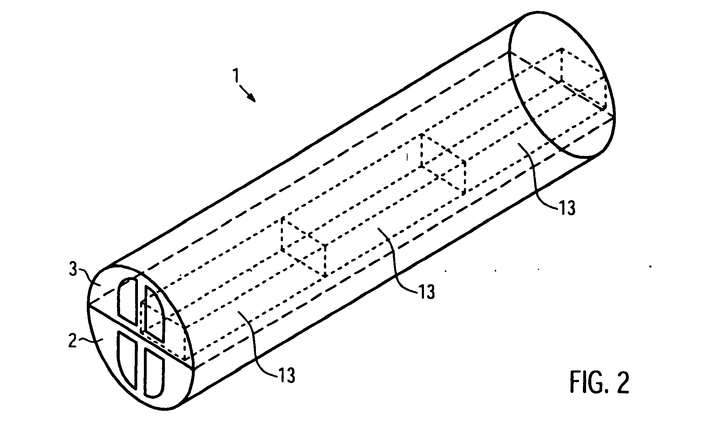

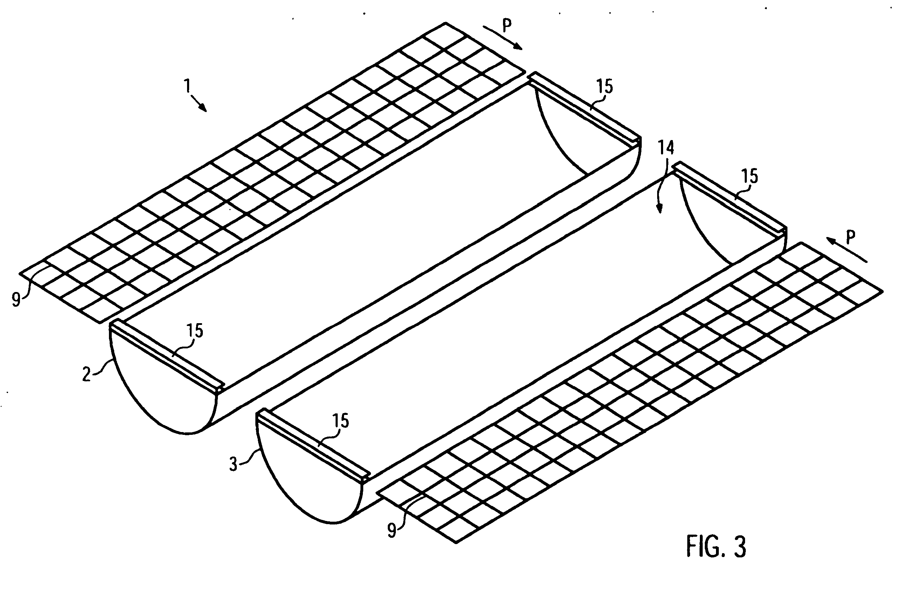

Figur 2 zeigt den in Figur 1 dargestellten Transportbehälter 1 in einer geschlossenen Stellung. Im geöffneten Zustand sind dabei zunächst sowohl das Unterteil 2, als auch das Oberteil 3 des Transportbehälters 1 mit Produkten 13 befüllt worden. Exemplarisch sind in Figur 3 drei quaderförmige Produkte 13 dargestellt, die im Oberteil 3 aufgenommen sind. Auch die übrigen Bereiche des Unterteils 2 und des Oberteils 3 sind - soweit die Geometrie der Produkte 13 dies zulässt - mit Produkten 13 befüllt worden. Anschließend wurde das Halteelement 9 um die zweite Schwenkachse 10 verschwenkt und in eine geschlossene Stellung gebracht, in der es durch das (nicht dargestellte) Schließelement gesichert wird. Schließlich wurde das Oberteil 3 um die durch das erste Scharnier 4 definierte Schwenkachse 5 verschwenkt. Durch diesen Vorgang wird der Transportbehälter 1 geschlossen und in die in Figur 2 gezeigte, zylindrische Form gebracht. In der geschlossenen Stellung kann das Oberteil 3 durch einen Verschluss am Unterteil 2 gesichert werden, um ein ungewolltes Öffnen des Transportbehälters 1 zu verhindern.

Figur 3 zeigt ein zweites Ausführungsbeispiel eines erfindungsgemäßen Transportbehälters 1. Auch in diesem Ausführungsbeispiel weist der Transportbehälter 1 ein Unterteil 2 und ein Oberteil 3 auf, die jeweils eine halbzylindrische Form haben. Der Übersichtlichkeit halber sind die Öffnungen 7 zum Durchtritt von Hochdruckmedium nicht dargestellt.

Ein erster Unterschied zum ersten Ausführungsbeispiel besteht darin, dass das Unterteil 2 und das Oberteil 3 im zweiten Ausführungsbeispiel nicht dauerhaft miteinander verbunden sind, sondern lösbar miteinander verbindbar sind. In Figur 3 sind sie in ihrem voneinander getrennten Zustand dargestellt, in dem die beiden Teile 2, 3 mit ihrer Einfüllöffnung 14 nach oben frei zugänglich sind, um Produkte 13 in die Teile 2, 3 einfüllen bzw. aus den Teilen 2, 3 entnehmen zu können. In der in Figur 2 gezeigten, geschlossenen Stellung des Transportbehälters werden die beiden Teile 2, 3 durch einen Verschluss aneinander gesichert.

Ein zweiter Unterschied zum ersten Ausführungsbeispiel besteht darin, dass nun sowohl das Untereil 2, als auch das Oberteil 3 ein eigenes Halteelement 9 haben, das wiederum gitterförmig ausgebildet ist. Schließlich besteht ein weiterer Unterschied darin, dass sowohl das Unterteil 2, als auch das Oberteil 3 jeweils eine Schiene 15 aufweisen. Das Halteelement 9 kann jeweils in Richtung des Pfeils P in die Schiene 15 des zugeordneten Teils 2, 3 des Transportbehälters 1 eingeschoben werden, um die Einfüllöffnung 14 zu überdecken und so die eingefüllten Produkte 13 im jeweiligen Teil 2, 3 des Transportbehälters 1 zu sichern. In seiner geschlossenen Stellung kann das Halteelement 9 entweder durch ein Schließelement oder lediglich durch Gravitation am jeweiligen Teil 2, 3 des Transportbehälters 1 gehalten werden. Nach dem Schließen der beiden einzelnen Teile 2, 3 des Transportbehälters 1 werden diese Teile 2, 3 so aufeinandergesetzt, dass sich insgesamt der geschlossene, zylindrische Transportbehälter 1 gemäß Figur 2 ergibt.

Figur 4 zeigt einen Querschnitt durch den geschlossenen und mit Produkten 13 gefüllten Transportbehälter 1. Während die Produkte 13 im Unterteil 2 am Boden des Unterteils 2 aufliegen, liegen die Produkte 13 im Oberteil 3 des Transportbehälters auf dem Haltelement 9 auf. Dadurch hält das Halteelement 9 die Produkte 13 im Oberteil 3. Zwischenräume 16 zwischen den Produkten sorgen für den Durchgang von Hochdruckmedium und - im Zusammenspiel mit den Öffnungen 12 im Halteelement 9 - für einen Druckausgleich im gesamten Transportbehälter 1.

Im Vergleich mit Figur 5 ist deutlich zu sehen, dass der erfindungsgemäße Transportbehälter 1 einen deutlich höheren Füllgrad bei automatisierter Befüllung erreicht als der herkömmliche Transportbehälter 1. Während der erfindungsgemäße Transportbehälter 1 zweiundzwanzig Produkte aufnimmt, kann der herkömmliche Transportbehälter 100 bei gleichen Außenabmessungen lediglich siebzehn Produkte aufnehmen. Durch den höheren Füllgrad sorgt der erfindungsgemäße Transportbehälter 1 für einen deutlich höheren Wirkungsgrad und für einen höheren Durchsatz in einer Hochdruckbehandlungsanlage.

Ausgehend von den dargestellten Ausführungsbeispielen kann der erfindungsgemäße Transportbehälter 1 auf vielfache Weise abgewandelt werden. Insbesondere sind beliebige Kombinationen denkbar zwischen lösbar oder dauerhaft aneinander befestigten Unter- und Oberteilen 2, 3, lösbar oder dauerhaft an einem oder beiden der Unter- und Oberteile 2, 3 befestigten Halteelementen 9, sowie über ein Scharnier 8 oder eine Schiene 15 am jeweiligen Teil 2, 3 beweglich gelagerten Halteelementen 9. Denkbar sind auch Varianten, bei denen im Unterteil 2 oder im Oberteil 3 zusätzliche Unterteilungen oder ggf. entfernbare Trennwände zum Sichern der Produkte 13 vorhanden sind oder bei denen das Halteelement 9 anders ausgebildet ist. Beispielsweise könnte als Halteelement 9 ein Netz oder eine Gruppe von Kettengliedern vorgesehen sein, oder das Halteelement könnte weitgehend geschlossen sein und nur wenige Durchtrittsöffnungen 12 für das Hochdruckmedium aufweisen.

Statt über ein Scharnier 4 könnten das Unterteil 2 und das Oberteil 3 des Transportbehälters 1 auch über andere geeignete Systeme dauerhaft oder lösbar miteinander verbunden sein, beispielsweise über Steckverbindungen.

Darüber hinaus besteht die Möglichkeit, dass federbelastete Sicherungselemente am Unterteil 2, am Oberteil 3 und/oder am Halteelement 9 vorgesehen sind, um die Produkte 13 insbesondere bei einem nur teilweise gefüllten Transportbehälter 1 während der Beförderung des Transportbehälters 1 und/oder während der Hochdruckbehandlung selbst sicherer an ihrem Platz zu halten. Beispielsweise könnte es bei einem Chargenwechsel, bei einem Leerfahren der Produktionslinie oder bei einer für das Füllen ungünstigen Geometrie der einzelnen Packungen zu einem nur teilweise gefülltem Transportbehälter 1 kommen. Die Sicherungselemente sorgen dann dafür, dass die Produkte 13 nicht verrutschen oder verkanten, sodass sich ihre Position im Transportbehälter 1 zwischen dem Beladen und dem Entladen des Transportbehälters 1 nicht ändert. Dies erleichtert das automatisierte Entladen des Transportbehälters 1 erheblich. Beispielsweise könnte ein solches Sicherungselement in Form einer Platte vorgesehen sein, die sich über eine oder mehrere Druckfedern am Halteelement 9 abstützt und so die im Transportbehälter-Unterteil 2 enthaltenen Produkte 13 nach unten drückt. Die Federbelastung der Sicherungselemente kann jedoch auch vertikal nach oben oder in seitlicher Richtung erfolgen.

## Patentansprüche

1. Transportbehälter (1) zur Aufnahme von Produkten (13) während einer Hochdruckbehandlung der Produkte (13),
wobei der Transportbehälter (1) ein Unterteil (2) und ein Oberteil (3) aufweist, die miteinander verbindbar sind,
und wobei sowohl das Unterteil (2), als auch das Oberteil (3) zur Aufnahme mindestens eines Produkts (13) ausgebildet ist,
**dadurch gekennzeichnet, dass** das Unterteil (2) und das Oberteil (3) jeweils eine halbzylindrische Form haben.

2. Transportbehälter nach Anspruch 1, **dadurch gekennzeichnet, dass** das Unterteil (2) und das Oberteil (3) relativ zueinander beweglich miteinander verbunden sind.

3. Transportbehälter nach einem der vorangehenden Ansprüche, **dadurch gekennzeichnet, dass** das Unterteil (2) und das Oberteil (3) über ein erstes Scharnier (4) miteinander verbunden sind.

4. Transportbehälter nach Anspruch 3, **dadurch gekennzeichnet, dass** das erste Scharnier (4) schmiermittelfrei ist.

5. Transportbehälter nach einem der vorangehenden Ansprüche, **dadurch gekennzeichnet, dass** mindestens ein Halteelement (9) vorgesehen ist, um im Oberteil (3) und/oder im Unterteil (2) aufgenommene Produkte (13) zu halten.

6. Transportbehälter nach Anspruch 5, **dadurch gekennzeichnet, dass** das Halteelement (9) am Unterteil (2) und/oder am Oberteil (3) lösbar anbringbar oder dauerhaft angebracht ist.

7. Transportbehälter nach Anspruch 6, **dadurch gekennzeichnet, dass** das Halteelement (9) über ein zweites Scharnier (8) am Unterteil (2) oder am Oberteil (3) angebracht ist.

8. Transportbehälter nach zumindest den Ansprüchen 3 und 7, **dadurch gekennzeichnet, dass** die durch das erste Scharnier (4) definierte Schwenkachse (5) parallel ist zu der durch das zweite Scharnier (8) definierten Schwenkachse (10).

9. Transportbehälter nach Anspruch 6, **dadurch gekennzeichnet, dass** das Halteelement (9) über eine Schiene (15) am Unterteil (2) und/oder am Oberteil (3) anbringbar oder angebracht ist.

10. Transportbehälter nach einem der Ansprüche 5 bis 9, **dadurch gekennzeichnet, dass** das Halteelement (9) lösbar am Unterteil (2) und/oder am Oberteil (3) festlegbar ist.

11. Transportbehälter nach einem der Ansprüche 5 bis 10, **dadurch gekennzeichnet, dass** das Halteelement (9) mindestens eine Öffnung (12) aufweist, um den Durchtritt von Hochdruckmedium zu erlauben.

12. Transportbehälter nach einem der Ansprüche 5 bis 11, **dadurch gekennzeichnet, dass** das Halteelement (9) zumindest abschnittsweise als Gitter ausgebildet ist.

## Claims

1. Transport container (1) for accommodating products (13) during high-pressure treatment of the products (13), the transport container (1) comprising a lower component (2) and an upper component (3) which are interconnectable, and both the lower component (2) and the upper component (3) being configured to accommodate at least one product (13), **characterised in that** the lower component (2) and the upper component (3) are each semicylindrical in shape.

2. Transport container according to claim 1, **characterised in that** the lower component (2) and the upper component (3) are interconnected so as to be movable relative to one another.

3. Transport container according to any one of the preceding claims, **characterised in that** the lower component (2) and the upper component (3) are interconnected via a first hinge (4).

4. Transport container according to claim 3, **characterised in that** the first hinge (4) is lubricant-free.

5. Transport container according to any one of the preceding claims, **characterised in that** at least one retaining element (9) is provided in order to retain products (13) accommodated in the upper component (3) and/or in the lower component (2).

6. Transport container according to claim 5, **characterised in that** the retaining element (9) can be releasably attached to, or is permanently attached to, the lower component (2) and/or the upper component (3).

7. Transport container according to claim 6, **characterised in that** retaining element (9) is attached to the lower component (2) or to the upper component (3) via a second hinge (8).

8. Transport container according to at least claim 3 and claim 7, **characterised in that** the pivoting axis (5) defined by the first hinge (4) is parallel to the pivoting axis (10) defined by the second hinge (8).

9. Transport container according to claim 6, **characterised in that** the retaining element (9) can be attached to, or is permanently attached to, the lower component (2) and/or the upper component (3) via a rail (15).

10. Transport container according to any one of claims 5 to 9, **characterised in that** the retaining element (9) can be releasably secured on the lower component (2) and/or on the upper component (3).

11. Transport container according to any one of claims 5 to 10, **characterised in that** the retaining element (9) has at least one opening (12) so as to allow a high-pressure medium to flow through.

12. Transport container according to any one of claims 5 to 11, **characterised in that** the retaining element (9) is configured as a grating at least in portions.

## Revendications

1. Récipient de transport (1) pour recevoir des produits (13) pendant un traitement haute pression des produits (13),
étant précisé que le récipient de transport (1) comporte une partie inférieure (2) et une partie supérieure (3) qui sont aptes à être reliées,
et que la partie inférieure (2), comme la partie supérieure (3), est conçue pour recevoir au moins un produit (13),
**caractérisé en ce que** la partie inférieure (2) et la partie supérieure (3) ont chacune la forme d'un demi-cylindre.

2. Récipient de transport selon la revendication 1, **caractérisé en ce que** la partie inférieure (2) et la partie supérieure (3) sont reliées en étant mobiles l'une par rapport à l'autre.

3. Récipient de transport selon l'une des revendications précédentes, **caractérisé en ce que** la partie inférieure (2) et la partie supérieure (3) sont reliées par une première charnière (4).

4. Récipient de transport selon la revendication 3, **caractérisé en ce que** la première charnière (4) est sans lubrifiant.

5. Récipient de transport selon l'une des revendications précédentes, **caractérisé en ce qu'**il est prévu au moins un élément de retenue (9) pour retenir les produits (13) logés dans la partie supérieure (3) et/ou dans la partie inférieure (2).

6. Récipient de transport selon la revendication 5, **caractérisé en ce que** l'élément de retenue (9) est apte à être monté de manière amovible ou est installé à demeure sur la partie inférieure (2) et/ou sur la partie supérieure (3).

7. Récipient de transport selon la revendication 6, **caractérisé en ce que** l'élément de retenue (9) est installé sur la partie inférieure (2) ou sur la partie supérieure (3) grâce à une seconde charnière (8).

8. Récipient de transport selon au moins les revendications 3 et 7, **caractérisé en ce que** l'axe de pivotement (5) défini par la première charnière (4) est parallèle à l'axe de pivotement (10) défini par la seconde charnière (8).

9. Récipient de transport selon la revendication 6, **caractérisé en ce que** l'élément de retenue (9) est apte à être monté ou est monté sur la partie inférieure (2) et/ou sur la partie supérieure (3) grâce à une coulisse (15).

10. Récipient de transport selon l'une des revendications 5 à 9, **caractérisé en ce que** l'élément de retenue (9) est apte à être fixé de manière amovible à la partie inférieure (2) et/ou à la partie supérieure (3).

11. Récipient de transport selon l'une des revendications 5 à 10, **caractérisé en ce que** l'élément de retenue (9) présente au moins une ouverture (12) pour permettre le passage d'un agent haute pression.

12. Récipient de transport selon l'une des revendications 5 à 11, **caractérisé en ce que** l'élément de retenue (9) est conçu au moins par zones comme un treillis.
